(19) Europäisches Patentamt
European Patent Office
Office européen des brevets

(11) EP 2 345 704 B1

(12) **EUROPEAN PATENT SPECIFICATION**

(45) Date of publication and mention of the grant of the patent:
**14.09.2016 Bulletin 2016/37**

(21) Application number: **09819241.2**

(22) Date of filing: **08.10.2009**

(51) Int Cl.:
***C09D 11/00*** *(2014.01)* ***B41J 2/01*** *(2006.01)*
***B41M 5/00*** *(2006.01)*

(86) International application number:
**PCT/JP2009/067540**

(87) International publication number:
**WO 2010/041707 (15.04.2010 Gazette 2010/15)**

# (54) AQUEOUS INKJET INK

WÄSSRIGE TINTENSTRAHLTINTE

ENCRE AQUEUSE POUR JET D'ENCRE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.10.2008 JP 2008261576**
**08.10.2008 JP 2008261577**

(43) Date of publication of application:
**20.07.2011 Bulletin 2011/29**

(73) Proprietor: **Riso Kagaku Corporation**
**Tokyo, 108-8385 (JP)**

(72) Inventors:
- **HAYASHI Akiko**
  **Tokyo 108-8385 (JP)**
- **NOMURA, Kohji**
  **Tokyo 108-8385 (JP)**
- **ARAI Sayako**
  **Tokyo 108-8385 (JP)**
- **ISHIMARU Yoshiaki**
  **Tokyo 108-8385 (JP)**
- **MOCHIZUKI Ayako**
  **Tokyo 108-8385 (JP)**
- **UOZUMI Shunsuke**
  **Tokyo 108-8385 (JP)**

(74) Representative: **Kotitschke & Heurung Partnerschaft mbB**
**Eduard-Schmid-Str. 2**
**81541 München (DE)**

(56) References cited:

| | |
|---|---|
| **EP-A2- 0 802 247** | **WO-A1-2008/130626** |
| **JP-A- 6 271 800** | **JP-A- 7 053 903** |
| **JP-A- 7 150 090** | **JP-A- 11 222 573** |
| **JP-A- 2000 290 548** | **JP-A- 2002 173 619** |
| **JP-B2- 02 003 827** | **JP-T- 2002 501 965** |
| **US-A- 5 630 868** | **US-A- 5 985 016** |
| **US-A1- 2006 162 612** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 345 704 B1

## Description

### TECHNICAL FIELD

The present invention relates to a water-based inkjet ink suitable for line head type inkjet printers, and more specifically relates to a water-based inkjet ink which is prevented from pigment aggregation and excellent in on-machine stability.

### BACKGROUND ART

There are various types of inks for inkjet printers including oil-based, water-based, solvent-based, and UV cutable ones. In particular, water-based inks have been widely used as products for households, offices and industries because they are free of strike through and high in character reproducibility. However, conventional water-based inks contain a large amount of water, and if printing is performed using ordinary plain paper as printing paper, problems arise such that the water contained in the inks makes the fibers of printing paper to swell, thereby causing curling and cockling.

In order to solve such problems of conventional water-based inks, Japanese Patent Laid-open Nos. 2005-220296 and 2007-144931 have proposed a water-based ink that contains a low-polarity water-soluble organic solvent such as polyalkylene glycol alkyl ether in an amount of 50 percent by mass or more so as to reduce the water content down to less than 50% whereby strike through is lowered and curling and cockling are eliminated when printing is performed on ordinary plain paper. Such a water-based ink, however, uses a low-polarity water-soluble organic solvent which is inferior in pigment dispersibility, and therefore, if the ink undergoes changes in its composition as a result of evaporation or absorption of water or contamination of other substances, it is easily impaired in pigment dispersibility, thereby causing problems such as aggregation, sedimentation and solidification of pigments.

For instance, if an inkjet head loaded with the water-based ink is left to stand in an environment of 45°C and 30% R.H., pigment dispersion stability is impaired as a result of evaporation of water, causing aggregation of pigments, and if it is left in an environment of 30°C and 100% R.H., aggregation of pigments takes place in the vicinity of nozzles or in the liquid discharge pipe to cause blocking of nozzles and clogging of the liquid discharge pipe, leading to fatal damage to the inkjet head and deterioration of on-machine stability. A method that is likely to prevent such problems is to provide the inkjet head with a cap or a maintenance mechanism, but this will largely increase the printer's cost particularly in the case of line type inkjet printers with many ejecting heads.

In addition, if an inkjet head loaded with the water-based ink is left to stand in an environment of 70°C, pigment dispersion stability is impaired as a result of evaporation of water, causing aggregation of pigments and restrictions on transport or storage conditions.

Japanese Patent Laid-open No. 2007-91911 has proposed that a self-dispersible pigment is used as a pigment with addition of a chemical compound such as 1,3-dimethyl-2-imidazolidinone in order to improve the pigment dispersion stability of the water-based ink described in the above-mentioned Patent documents. The use of a chemical compound such as 1,3-dimethyl-2-imidazolidinone, however, will lower the safety and increase the cost.

[Patent document 1] Japanese Patent Laid-open No. 2005-220296.
[Patent document 2] Japanese Patent Laid-open No. 2007-144931.
[Patent document 3] Japanese Patent Laid-open No. 2007-91911.

### DISCLOSURE OF INVENTION

### PROBLEM TO BE SOLVED BY THE INVENTION

The object of the present invention is to improve, in a simple way, the pigment dispersion stability of the water-based ink which contains a low-polarity water-soluble organic solvent so as to reduce the water content, and to provide an inkjet ink that is excellent in on-machine stability and also provide an inkjet ink that is excellent in storage stability.

### MEANS FOR SOLVING THE PROBLEMS

As a result of diligent researches for the above-mentioned object, the present inventors have found that a water-based ink which contains a low-polarity water-soluble organic solvent so as to reduce water content and prevent printing paper from curling can be improved in dispersion stability of pigments and on-machine stability of inks by using, as a pigment, a self-dispersible pigment containing a particular counter ion, and thus have completed the present invention.

Also, the present inventors have found that dispersion stability or pigments and storage stability of inks can be

further improved by allowing a basic substance to co-exist with the ink for maintaining the pH of the ink to be basic, and thus have completed the present invention.

The subject matter of the present invention is defined in claims 1-8 as attached.

Thus, the present invention provides a water-based inkjet ink comprising at least water, a low-polarity water-soluble organic solvent and a pigment, wherein said water constitutes 60 percent by mass or less of the total quantity of the ink while said water-soluble organic solvent constitutes 15 percent by mass or more of the total quantity of the ink, said pigment comprising a self-dispersible pigment that has anionic functional groups on the surface thereof and contains, as counter ions, quaternary ammonium ions represented by the formula (1) described below, and said ink may optionally comprise a basic substance in an amount sufficient to allow the ink to have a pH value of 9 to 11:

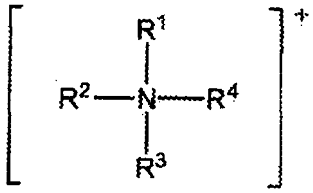

(1)

(In the formula, $R^1$, $R^2$, $R^3$ and $R^4$ independently represent a substituted or unsubstituted alkyl group.)

## EFFECTS OF INVENTION

According to the present invention, a water-based inkjet ink contains a low-polarity water-soluble organic solvent to decrease the water content, and further contains, as a pigment, a self-dispersible pigment that has anionic functional groups on the surface thereof and has, as counter ions, quaternary ammonium ions represented by the formula (1) described above. Consequently, not only curling and cockling are prevented even when printing is carried out on ordinary plain paper, but also dispersion stability of pigments is improved to ensure that blocking of nozzles and clogging of the liquid discharge pipe are prevented even in a high-temperature dry environment or a high-humidity environment, making it possible to provide an inkjet ink with inkjet recoverability, i.e. on-machine stability. Also, when the ink contains a basic substance so as to have a pH within a basic region, dispersion stability of pigments is improved to ensure that the ink does not undergo any change in properties even when stored in a high-temperature environment. In short, an inkjet ink excellent in storage stability is provided.

## MODE FOR CURRYING OUT THE INVENTION

The present invention is described in more detail below.

The water-based inkjet ink of the invention comprises at least an aqueous medium composed of water and a low-polarity water-soluble organic solvent, and the above-mentioned self-dispersible pigment which is dispersed in the aqueous medium, and may optionally comprise a basic substance which is dissolved in the above water-based medium.

The aqueous medium to be used for the invention is produced by mixing water with a water-soluble organic solvent. The water-soluble organic solvent serves to prevent curling of printing paper from taking place during printing. According to the present invention said water-soluble organic solvent comprises at least one selected from the group consisting of tetraethylene glycol monobutyl ether, triethylene glycol monohexyl ether, triethylene glycol ethyl ether ($\alpha$-value=59,3), 2-ethyl-1,3-hexandiol and hexylene glycol.

Low-polarity water-soluble organic solvents that can be used for the present invention include, for example, glycol ethers, acetates of glycol ethers, glycerin, polyglycerin, imidazolidinone-based solvents, and 3-methyl-2,4-pentanediol.

Useful glycol ethers include alkylene glycol alkyl ethers and polyalkylene glycol alkyl ethers (which are herein referred to as (poly)alkylene glycol alkyl ethers), such as chemical compounds as represented by the formula (2) given bellow.

$$R^3\text{-}O(C_2H_4\text{-}O)_n\text{-}R^6 \qquad (2)$$

(In the formula (2), $R^5$ and $R^6$ independently denote a hydrogen atom or an alkyl group with 1-6, preferably 4-6, carbon atoms, at least either $R^5$ or $R^6$ being an alkyl group, and n denotes an integer in the range of 1 to 4, preferably 3 to 4, and more preferably 4.)

Specifically, the (poly)alkylene glycol alkyl ethers represented by the above mentioned formula (2) include, for example, ethylene glycol monobutyl ether, diethylene glycol monomethyl ether, diethylene glycol monoethyl ether, diethylene glycol monopropyl ether, diethylene glycol monobutyl ether, triethylene glycol, monomethyl ether, triethylene glycol monoethyl ether, triethylene glycol monopropyl ether, triethylene glycol monobutyl ether, triethylene glycol monohexyl ether, tetraethylene glycol monomethyl ether, tetraethylene glycol monoethyl ether, tetraethylene glycol monopropyl ether, tetraethylene glycol monobutyl ether, diethylene glycol diethyl ether, diethylene glycol dibutyl ether, triethylene glycol dimethyl ether, and triethylene glycol dibutyl ether.

Other (poly)alkylene glycol alkyl ethers specifically include chemical compounds as represented by the formula (3) given below.

$$R^5\text{-}O(C_3H_6\text{-}O)_6\text{-}R^6 \qquad (3)$$

(In the formula (2), $R^5$ and $R^6$ independently denote a hydrogen atom or an alkyl group with 1-6, preferably 4-6, carbon atoms, at least either $R^5$ or $R^6$ being an alkyl group, and n denotes an integer in the range of 1 to 4, preferably 3 to 4, and more preferably 4.)

Specifically, the (poly)alkylene glycol alkyl ethers represented by the above mentioned formula (3) include, for example, propylene glycol monobutyl ether, dipropylene glycol monomethyl ether, dipropylene glycol monoethyl ether, dipropylene glycol monopropyl ether, dipropylene glycol monobutyl ether, tripropylene glycol monomethyl ether, tripropylene glycol monoethyl ether, tripropylene glycol monopropyl ether, tripropylene glycol monobutyl ether, tetrapropylene glycol monomethyl ether, dipropylene glycol dibutyl ether, and tripropylene glycol dibutyl ether.

Of the water-soluble organic solvents listed above, those water-soluble organic solvents with an $\alpha$ value of 65° or less are preferred, and those water-soluble organic solvents with an $\alpha$ value of 35° to 60° are more preferred, for the present invention in order to effectively prevent the occurrence of curling. Such water-soluble organic solvents include tetraethylene glycol monobutyl ether ($\alpha$ value = 55.2), trienthylene glycol methyl ether ($\alpha$ value =59.3), trienthylene glycol hexyl ether ($\alpha$ value = 48.4), 2-ethyl-1,3hexanediol ($\alpha$ value = 55.0), and hexylene glycol ($\alpha$ value = 61.2).

The $\alpha$-value means the value of $\alpha$ determined by tan$\alpha$ =(inorganic value/organic value). Herein, the "organic value" and the "inorganic value" are based on the notion used in the "organic conception diagram" proposed by Atsushi Fujita, in which nature of organic compounds is categorized by two factors of "organic nature" derived from the chain of covalent bonds of carbon chains and "inorganic nature" derived from the influence of electrostatic properties in substituents (functional groups), and each factor is determined from the structure of compounds and converted to numerical values. The value $\alpha$ indicates the quantitative balance between the "organic nature and the "inorganic nature" of a compound. Details of the "organic conception diagram" are described in "systematic Qualitative Organic Analysis (Mixtures)", Atsushi Fujita et al., Kazama Shobo Co., Ltd. (1974).

For the present invention, the water-soluble organic solvent with an $\alpha$ value of 65° or less may be used in combination with other water-soluble organic solvents. Such other water-soluble organic solvents include, for example, glycerin ($\alpha$ value = 78.7), diglycerin ($\alpha$ value = 74.2), tetraglycerin ($\alpha$ value = 70.0), hexaglycerin ($\alpha$ value = 68.2), decaglycerin ($\alpha$ value = 66.5), and 1,3-propanediol ($\alpha$ value =73.3), as well as those water-soluble organic solvents listed above.

According to the preferred embodiments of the present invention, the water-soluble organic solvent preferably contains at least one selected from the group consisting of glycerin and polyglycerins. Useful polyglycerins include those comprising 2 to 10 glycerin units, of which diglycerin is preferred. Glycerins and polyglycerins serve as a humectant that prevents the ink from undergoing changes in composition due to water evaporation from the ink, thereby leading to improved on-machine stability. Such a humectant should preferably constitute 5 percent by mass or more, more preferably 5 to 30 percent by mass, of the total quantity of the ink.

In the water-based inkjet ink of the present invention, water needs to constitute 60 percent by mass or less of the total quantity of the ink, and should preferably constitute 35 to 60 percent by mass of the total quantity of the ink. When the water-based inkjet ink of the present invention comprises a basic substance, water constitutes 25 to 55 percent by mass of the total quantity of the ink, and particularly preferably constitute 30 to 50 percent by mass of the total quantify of the ink. Water permeates into fibers of the paper immediately after hitting it and at the same time serves to fix the pigment on the paper surface by reducing its fluidity, thereby contributing to high-resolution of images. Therefore, water is a necessary component to produce high-resolution images. However, if the water content is too large, it will become impossible to properly prevent the curling and cockling of printing paper during printing. On the other hand, if the water content is too stall, the ink will become so high in viscosity that the ink cannot be discharged stably or that quality of images can be impaired.

In the water-based inkjet ink of the present invention, the water-soluble organic solvent needs to constitute 15 percent by mass or more of the total quantity of the ink, and should preferably constitute 35 to 60 percent by mass of the total quantity of the ink when the water-based inkjet ink does not comprise the basic substance. When the water-based inkjet ink comprises the basic substance, the water-soluble organic solvent needs to constitute 15 to 65 percent by mass of the total quantity of the ink, more preferably constitute 25 to 60 percent by mass of the total quantity of the ink, and still more preferably constitute 40 to 60 percent by mass of the total quantity of the ink. If the amount of the

water-soluble organic solvent is too small, it will become impossible to properly prevent the curling and cockling of printing paper during printing. If the amount of the water-soluble organic solvent is too large, dispersion stability of pigments may be impaired.

For the present invention, the content of the water-soluble organic solvent with an $\alpha$ value of 65° or less should preferably be 20 percent by mass or more of the total quantity of the ink, and it should more preferably be 25 percent by mass or more, in order to effectively prevent the curling and cockling of printing paper during printing. Because the invention uses, as a pigment, a self-dispersible pigment as described below, a stable pigment dispersion can be achieved in an ink containing such a low-polarity organic solvent.

If a (poly)alkylene glycol alkyl ether is used as the water-soluble organic solvent in the present invention, its content should preferably be 15 to 55 percent by mass of the total quantity of the ink, and it should more preferably be 15 to 50 percent by mass of the total quantity of the ink. In addition, as the (poly)alkylene glycol alkyl ether, at least one selected from the group consisting of tetraethylene glycol monobutyl ether and triethylene glycol hexyl ether is preferably used, and the content thereof should preferably be 20 percent by mass or more of the total quantity of the ink, and it should more preferably be 25 percent by mass or more of the total quantity of the ink. This virtually eliminates the occurrence of curling and cockling of printing paper during printing, thereby ensuring high speed feeding of printing paper and making it possible to produce an inkjet ink with stable pigment dispersion and on-machine stability as well as storage stability.

The mass ratio of water and the low-polarity water-soluble organic solvent that constitute the aqueous medium in the inkjet ink of the present invention (water/water-soluble organic solvent) should preferably be in the range of 0.5 to 5.5, more preferably 0.75 to 2.5.

The self-dispersible pigment used for the invention can disperse without any help of dispersing agents, and consists of pigment particles having anionic functional groups on their surface and having, as their counter ions, quaternary ammonium ions represented by the above mentioned formula (1). Useful pigments include black pigments such as carbon black, and organic pigments of different colors.

In the pigment particles of the self-dispersible pigments used for the present invention, the anionic functional groups may be bonded directly to the surface of the pigment particles, or they may be bonded via other atomic groups to the surface.

Useful anionic functional groups include, for example, anionic polar groups such as carboxylic acid group, sulfonic acid group, and phosphoric acid group, of which carboxylic acid group is preferred.

Such anionic functional groups can be bonded to the surface of pigment particles in accordance with a method as described in Japanese Patent Laid-open No. 2003-513137, International Publication WO 97/48769, Japanese Patent Laid-open Nos. HEI 10-110129, HEI 11-246807, HEI 11-57458, HEI 11-189739, HEI 11-323232 and 2000-265094, etc.

A self-dispersible pigment having the anionic functional groups together with quaternary ammonium ions represented by the above mentioned formula (1) as counter ions is used as an essential component of the pigment in the present invention. The quaternary ammonium ions represented by the above mentioned formula (1) include tetramethyl ammonium ions, tetraethyl ammonium ions, tetrapropyl ammonium ions, and tetrabutyl ammonium ions, of which tetrapropyl ammonium ions and tetrabutyl ammonium ions are more preferred, tetrabutyl ammonium ions being particularly preferred.

The present invention uses a self-dispersible pigment having quaternary ammonium ions as counter ions, and thus it is expected that in the aqueous medium consisting of water and a low-polarity water-soluble organic solvent, the pigment is ionized in water to show an affinity to water while it forms a quaternary ammonium salt in the low-polarity water-soluble organic solvent to show an affinity to the organic solvent, whereby pigment dispersion stability is maintained even when the ink composition undergoes changes as a result of evaporation of water etc.

Pigments that have anionic functional groups on their surface are usually supplied in a form of a sodium salt, potassium salt, amine salt, or free acid. Such self-dispersible pigments are commercially available from Cabot Corporation under the trade names of CAB-O-JET300, CAB-O-JET200, CAB-O-JET250, CAB-O-JET260, and CAB-O-JET270.

The pigment in the form of free acid can be converted into the self-dispersible pigment having quaternary ammonium ions as counter ions, by adding thereto quaternary ammonium ions. The resultant pigment can be directly mixed in the ink of the present invention. The pigment in the form of a salt can be converted into the self-dispersible pigment having quaternary ammonium ions as counter ions, by first converting it into a free acid form using an ion exchange resin and then adding thereto quaternary ammonium ions. Alternatively, the pigment in the form of a salt may be directly converted into the self-dispersible pigment having quaternary ammonium ions as counter ions by use of an ion exchange resin that has quaternary ammonium ions.

In the present invention, it is not necessary that all of the counter ions in the self-dispersible pigment are quaternary ammonium ions, and the quaternary ammonium ions, which act as counter ions, only need to constitute an equivalent ratio (quaternary ammonium ions/total counter ions) of 0.45 to 1, preferably 0.55 to 1, relative to the total amount of the counter ions in the self-dispersible pigment. When the equivalent ratio is less than 0.45, dispersion stability of pigments may not be improved sufficiently. Counter ions other than quaternary ammonium ions are not particularly

limited, but include lithium ions, sodium ions, potassium ions, magnesium ions and calcium ions, of which lithium ions, sodium ions and potassium ions are preferred, sodium ions being more preferred.

Thus, the self-dispersible pigment used in the present invention may be, for example, composed solely of one (a self-dispersible pigment X) obtained by completely converting a self-dispersible pigment in a salt form into one in a quaternary ammonium salt form, or solely of one (a self-dispersible pigment Y) obtained by converting, for example, half or more of the counter ions of a self-dispersible pigment in a salt form into quaternary ammonium ions, or composed of a mixture (self-dispersible pigment Z) of the above self-dispersible pigment X with a self-dispersible pigment in a salt form that contains counter ions other than quaternary ammonium ions.

For the water-based inkjet ink of the present invention, there are no specific limitations on the content of the pigment, but the content, in terms of solid content, should preferably be in the range of 0.1 percent by mass to 15 percent by mass, more preferably 1 percent by mass to 15 percent by mass, and still more preferably 3 to 10 percent by mass. No sufficient image density can be obtained when the content is less than 0.1 percent by mass. The ink tends to change in quality and clogging of nozzles becomes more likely to occur when it exceeds 15 percent by mass.

There are no specific limitations on the basic substance to be used in the present invention as long as it can serve to adjust the pH of the ink to 9-11. Examples of such basic substances include hydroxides of either an alkali metal or an alkaline earth metal, and amines. Such hydroxides of either an alkali metal or an alkaline earth metal include, for example, lithium hydroxide, sodium hydroxide, potassium hydroxide, calcium hydroxide and magnesium hydroxide. Such amines include, for example, ethanol amines such as monoethanol amines, diethanol amines and triethanol amines as well as ammonia water (ammonium hydroxide) and a quaternary ammonium salt having the same ammonium ion as the above-mentioned counter ion. Of these, sodium hydroxide, ethanol amines, and the ammonium salt having the same ammonium ion as the counter ion of the self-dispsersible pigment, are used preferably. The content of sodium hydroxide is normally in the range of 0.005 to 0.05 percent by mass of the total quantity of the ink. The content of ethanol amines is formally in the range of 0.5 to 5 percent by mass of the total quantity of the ink. The content of the ammonium salt is normally in the range of 0.01 to 1 percent by mass of the total quantity of the ink. Storage stability of inks becomes insufficient when the pH value is less than 9, whilst viscosity of inks increases and discharge performance of inks deteriorates when the pH value is above 11.

The water-based inkjet ink of the present invention may contain, in addition to the above components, other various additives including surface active agents, anti-oxidizing agents, and antimicrobial agents as required.

Various surface active agents may be used as the surface active agent, but ethylene oxide adducts of acetylene glycol are preferably used in order to improve the discharging performance of the ink. The content of such surface active agents should preferably be 0.5 to 5 percent by mass of the total quantity of the ink.

A water-based inkjet ink according to the present invention may be prepared by, for example, putting all components at once or in installments in a known dispersion apparatus such as a disper to achieve their dispersion, and if required, passing the liquid through a known filtering device such as a membrane filter. Specifically, preparation may be carried out by first mixing part of the solvent and the entire volume of the pigment to produce a uniform liquid mixture, dispersing it in a dispersion apparatus, adding the remaining components to this dispersion, and passing it through a filtering device.

The water-based inkjet ink of the present invention is suitable for printing in a line type inkjet printer which comprises many nozzles arrayed in longitudinal direction. In such an inkjet printer, image is produced in one pass of printing paper through the printer to perform high speed printing at 100 ppm or more. For line type inkjet printers, the inkjet ink of the present invention can be supplied in an ink container of a volume of 500 ml or more designed especially for each printer.

A water-based inkjet ink for line type inkjet printers should have a viscosity that is suitable for discharging from the inkjet head nozzle at 23°C, and specifically, it should be adjusted in the range of 5 to 50 mPa·s, more preferably in the range of 5 to 30 mPa·s, and still more preferably in the range of 7 to 14 mPa·s. The ink should preferably have a freezing point of -5°C or less so that it will not freeze in a cold storage environment. The viscosity and the freezing point can be adjusted by selecting proper amounts and types of water and water-soluble organic solvents and, if necessary, adding additives.

## EXAMPLES

The present invention is described in more detail below by way of examples, but these examples are not intended to place any limitations on the invention.

### Examples I-1 to I-3

A self-dispersible carbon black dispersion (trade name CAB-O-JET300, corresponding to the self-dispersible pigment dispersion I-10 in Table 1) produced by Cabot Corporation was treated with an ion exchange resin (trade name

AMBERLITE, produced by Sigma-Aldrich Corporation) that adsorbed tetrabutyl ammonium ions so as to allow the sodium ions contained in the dispersion as counter ions to be converted into tetrabutyl ammonium ions (the converted dispersions correspond to self-dispersible pigment dispersions I-1, I-2 and 1-3 in Table 1).

The concentration of the sodium ions contained in the converted dispersion was measured with a sodium ion concentration meter, and the difference between the measurement and the sodium ion concentration in the original dispersion was assumed to be equal to the concentration of tetrabutyl ammonium ions to determine their equivalent ratio relative to the total quantity of the counter ions. Results are shown in Table 1.

The self-dispersible carbon black dispersion (trade name CAB-O-JET300, corresponding to the self-dispersible pigment dispersion I-10 in Table 1) produced by Cabot Corporation is a 15 percent by mass aqueous dispersion of carbon black particles that have carboxylic acid groups (with counter ions being sodium ions, and the ion concentration being 0.036 mol/L) bonded to the surface thereof.

The components shown in Table 1 were mixed in the ratios shown in Table 1, and then filtered through an 8 μm cellulose acetate membrane filter to produce an inkjet ink.

For each inkjet ink produced in the above mentioned examples, the method described below was used to evaluate on-machine stability of the ink. Results of evaluation are shown in Table 1.

• Inkjet recoverability (on-machine stability) of the ink

An inkjet ink sample was put in an inkjet printer head CB 1 (318 nozzles) produced by Toshiba Tec Corporation, and left to stand for seven days in a thermohygrostat adjusted to a temperature of 45°C and a humidity of 30% R.H., a temperature of 45°C and a humidity of 100% R.H., or a temperature of 23°C and a humidity of 50%R.H. Afterwards, in an environment of a temperature of 23°C and a humidity of 50% R.H., a discharge recovery process consisting of applying a pressure of 10 Kps to the ink for 10 seconds and aspirating the ink to remove it from the surface of the nozzles in the printer head was carried out repeatedly, followed by evaluation of the inkjet performance according to the following criteria.

A: Discharging from all nozzles was recovered after repeating the recovery process three or less times.
B: Discharging from all nozzles was recovered after repeating the recovery process ten or less times.
C: Discharging was not recovered in one or more nozzle after repeating the recovery process ten times.

<u>Examples I-4 to I-5</u>

The same procedure as in Example I-1 except that counter ions were converted to either tetraethyl ammonium ions or tetramethyl ammonium ions was carried out to produce inkjet inks, followed by evaluation. Results are shown in Table 1.

<u>Examples I-6 to I-8</u>

The same procedure as in Example I-1 except that the self-dispersible pigment dispersion I-6, I-7 or I-8 was used instead of the self-dispersible pigment dispersion I-1 was carried out to produce inkjet inks, followed by evaluation. Results are shown in Table 1.

The self-dispersible pigment dispersion I-6 was produced by converting the counter ions in the same manner as in Example I-1 except that a self-dispersible cyan pigment dispersion (trade name: CAB-O-JET250, produced by Cabot Corporation) was used instead of the self-dispersible carbon black dispersion (trade name: CAB-O-JET300, produced by Cabot Corporation). This self-dispersible cyan pigment dispersion (trade name: CAB-O-JET250) is a 10 percent by mass aqueous dispersion of phthalocyanine blue (PB 15:4) particles that have carboxylic acid groups (with counter ions being sodium ions and the ion concentration being 0.024 mol/L) bonded to the surface thereof.

The self-dispersible pigment dispersion I-7 was produced by converting the counter ions in the same manner as in Example I-1 except that a self-dispersible magenta pigment dispersion (trade name: CAB-O-JET260, produced by Cabot Corporation) was used instead of the self-dispersible carbon black dispersion (trade name: CAB-O-JET300, produced by Cabot Corporation). This self-dispersible magenta pigment dispersion (trade name: CAB-O-JET260) is a 10 percent by mass aqueous dispersion of dimethylquinacridone (PR122) particles that have carboxylic acid groups (with counter ions being sodium ions and the ion concentration being 0.024 mol/L) bonded to the surface thereof.

The self-dispersible pigment dispersion 1-8 was produced by converting the counter ions in the same manner as in Example I-1 except that a self-dispersible yellow pigment dispersion (trade name: CAB-O-JET270, produced by Cabot Corporation) was used instead of the self-dispersible carbon black dispersion (trade name: CAB-O-JET300, produced by Cabot Corporation). This self-dispersible yellow pigment dispersion (trade name: CAB-O-JET270) is a 10 percent by mass aqueous dispersion of monoazo yellow (PY74) particles that have carboxylic acid groups (with counter

ions being sodium ions and the ion concentration being 0.024 mol/L) bonded on the surface thereof.

Comparative example, I-1

The same procedure as in Example I-1 was carried out to produce an inkjet ink except that the counter ions were converted into lithium ions, followed by evaluation. Results are shown in Table 1.

Comparative example I-2

The same procedure as in Example I-1 was carried out to produce an inkjet ink except that the self-dispersible carbon black dispersion produced by Cabot Corporation (trade name: CAB-O-JET300, corresponding to the self-dispersible pigment dispersion I-10 in Table 1) was used as it was without any conversion of counter ions, followed by evaluation. Results are shown in Table 1.

Table 1

| Materials | | | Counter ion | Eq. ratio | Ex. I-1 | Ex. I-2 | Ex. I-3 | Ex. I-4 | Ex. I-5 | Ex. I-6 | Ex. I-7 | Ex. I-8 | Comp. Ex. I-1 | Comp. Ex. I-2 |
|---|---|---|---|---|---|---|---|---|---|---|---|---|---|---|
| Ink composition | Pigment | Self-dispersible pigment dispersion I-1 | Tetrabutyl ammonium | 0.8 | 50 | | | | | | | | | |
| | | | Sodium ion | 0.2 | | | | | | | | | | |
| | | Self-dispersible pigment dispersion I-2 | Tetrabutyl ammonium | 0.65 | | 50 | | | | | | | | |
| | | | Sodium ion | 0.35 | | | | | | | | | | |
| | | Self-dispersible pigment dispersion I-3 | Tetrabutyl ammonium | 0.48 | | | 50 | | | | | | | |
| | | | Sodium ion | 0.52 | | | | | | | | | | |
| | | Self-dispersible pigment dispersion I-4 | Tetrabutyl ammonium | 0.8 | | | | 50 | | | | | | |
| | | | Sodium ion | 0.2 | | | | | | | | | | |
| | | Self-dispersible pigment dispersion I-5 | Tetrabutyl ammonium | 0.8 | | | | | 50 | | | | | |
| | | | Sodium ion | 0.2 | | | | | | | | | | |
| | | Self-dispersible pigment dispersion I-6 | Tetrabutyl ammonium | 0.8 | | | | | | 50 | | | | |
| | | | Sodium ion | 0.2 | | | | | | | | | | |
| | | Self-dispersible pigment dispersion I-7 | Tetrabutyl ammonium | 0.8 | | | | | | | 50 | | | |
| | | | Sodium ion | 0.2 | | | | | | | | | | |
| | | Self-dispersible pigment dispersion I-8 | Tetrabutyl ammonium | 0.8 | | | | | | | | 50 | | |
| | | | Sodium ion | 0.2 | | | | | | | | | | |
| | | Self-dispersible pigment dispersion I-9 | Lithium ion | 0.8 | | | | | | | | | 50 | |
| | | | Sodium ion | 0.2 | | | | | | | | | | |
| | | Self-dispersible pigment dispersion I-10 | Sodium ion | 1 | | | | | | | | | | 50 |
| | Water-soluble organic solvent | Diglycerin (α value = 74.2) | | | 10 | 10 | 10 | 10 | 10 | 10 | 10 | 10 | 10 | 10 |
| | | Tetraethylene glycol monobutylether (α value = 55.2) | | | 30 | 30 | 30 | 30 | 30 | 30 | 30 | 30 | 30 | 30 |
| | Surface active agent | SURFYNOL 465 | | | 2 | 2 | 2 | 2 | 2 | 2 | 2 | 2 | 2 | 2 |
| | Water | Distilled water | | | 8 | 8 | 8 | 8 | 8 | 8 | 8 | 8 | 8 | 8 |
| | Total | | | | 100 | 100 | 100 | 100 | 100 | 100 | 100 | 100 | 100 | 100 |
| | Water content relative to total ink | | | | 50.5 | 50.5 | 50.5 | 50.5 | 50.6 | 53 | 53 | 53 | 50.5 | 50.5 |
| Ink recoverability in head left for 7 days at 45°C and 30% R.H. | | | | | A | A | A | B | B | A | A | A | C | C |
| Ink recoverability in head left for 7 days at 45°C and 100% R.H. | | | | | A | A | A | A | A | A | A | A | C | C |
| Ink recoverability in head left for 9 days at 23°C and 50% R.H. | | | | | A | A | A | A | A | A | A | A | A | C |

The raw materials listed in Table 1 are as described below.
SURFYNOL 465 (trade name): Ethylene oxide adduct of acetylene glycol (surface active agent) produced by Air Products Industry Co., Ltd.

Results in Table 1 show that the inkjet inks produced in Examples I-1 to I-8, which belong to the present invention, are high in inkjet recoverability and on-machine stability under all conditions examined. In particular, it can be seen that the inkjet inks produced in Examples I-1 to I-3 and I-6 to I-8, in which tetrabutyl ammonium ions were used as counter ions, were excellent in inkjet recoverability even under high-temperature dry conditions.

In contrast, the inkjet ink produced in Comparative Example I-1, in which lithium ions were used as counter ions, was satisfactory in use at ordinary temperature but poor in inkjet recoverability under high-temperature or high-humidity conditions, suggesting that it was not suitable for use under high-temperature and high-humidity conditions. The inkjet ink produced in Comparative Example 1-2, in which sodium ions were used as counter ions, was poor in inkjet recoverability under all conditions examined and inferior in on-machine stability.

Examples II-1_ to II-7 and Comparative Examples II-1 to II-3

A self-dispersible carbon black dispersion (trade name CAB-O-JET400, corresponding to the self-dispersible pigment dispersion II-4 in Table 2) produced by Cabot Corporation was treated with an ion exchange resin (trade name AMBERLITE, produced by Sigma-Aldrich Corporation) that adsorbed tetrabutyl ammonium ions so as to allow the sodium ions contained in the dispersion as counter ions to be converted into tetrabutyl ammonium ions, thereby producing the self-dispersible pigment dispersion II-1. The conversion rate of the counter ions was 80%.

The self-dispersible pigment dispersion II-2 was produced by converting the counter ions by the same procedure as used for the above mentioned self-dispersible pigment dispersion II-1 except that tetramethyl ammonium ions were used instead of tetrabutyl ammonium ions. The conversion rate of the counter ions was 80%.

The self-dispersible pigment dispersion II-3 was produced by converting the counter ions by the same procedure as used for the above mentioned self-dispersible pigment dispersion II-1 except that tetramethyl ammonium ions were used instead of tetrabutyl ammonium ions. The conversion rate of the counter ions was 80%.

The self-dispersible carbon black dispersion (trade name CAB-O-JET400, corresponding to the self-dispersible pigment dispersion II-4 in Table 2) produced by Cabot Corporation is a 15 percent by mass aqueous dispersion of carbon black particles that have phosphoric acid groups (with counter ions being sodium ions) bonded to the surface thereof.

A self-dispersible carbon black dispersion (trade name CAB-O-JET300, corresponding to the sell-dispersible pigment dispersion II-7 in Table 2) produced by Cabot Corporation was treated with an ion exchange resin (trade name AMBERLITE, produced by Sigma-Aldrich Corporation) that adsorbed tetrabutyl ammonium ions so as to allow the sodium ions contained in the dispersion as counter ions to be converted into tetrabutyl ammonium ions, thereby producing the self-dispersible pigment dispersion II-5. The conversion rate of the counter ions was 80%.

The self-dispersible pigment dispersion II-6 was produced by converting the counter ions by the same procedure as used for the above mentioned self-dispersible pigment dispersion II-5 except that tetramethyl ammonium ions were used instead of tetrabutyl ammonium ions. The conversion rate of the counter ions was 80%.

The self-dispersible carbon black dispersion (trade name CAB-O-JET300, corresponding to the self-dispersible pigment dispersion II-7 in Table 2) produced by Cabot Corporation is a 15 percent by mass aqueous dispersion of carbon black particles that have carboxylic acid groups (with counter ions being sodium ions) bonded to the surface thereof.

The components shown in Table 2 were mixed in the ratios shown in Table 2, and then filtered through an 8 μm filter to produce an inkjet ink.

For each inkjet ink produced in the above mentioned examples, the method described below was used to evaluate storage stability. Results of evaluation are shown in Table 2.

Change in viscosity of ink (storage stability)

The viscosity (initial viscosity) of the ink produced was measured. Then, a gloss bottle with a volume of 20 mL filled with this ink was left to stand at 70°C for 7 days, followed by determining its viscosity (viscosity after being left to stand) and calculating the rate of change by the formula given below:

$$\text{Rate of change (\%)} = ((\text{viscosity after being left to stand} - \text{initial viscosity})/\text{initial viscosity}) \times 100$$

A rheometer ReoStress 300 (manufactured by Haake) was used to measure the viscosity under the conditions of 23°C and a shear stress of 10 pa. Evaluation was carried out according to the following criteria.

A: The absolute value of the rate of change is less than 10%.
B: The absolute value of the rate of change is 10% or more, and less than 20%.
C: The absolute value of the rate of change is 20% or more.

If the viscosity of the ink is above 50 mPas, printing is difficult even after heating the ink to decrease its viscosity.

Table 2

| | | | | | Ex. II-1 | Ex. II-2 | Ex. II-3 | Ex. II-4 | Ex. II-5 | Ex. II-6 | Ex. II-7 | Comp. Ex. II-1 | Comp. Ex. II-2 | Comp. Ex. II-3 |
|---|---|---|---|---|---|---|---|---|---|---|---|---|---|---|
| Ink composition | Pigment | | Anionic functional group | Counter ion | | | | | | | | | | |
| | | Self-dispersible pigment dispersion II-1 | Phosphoric acid group | Tetrabutyl ammonium | 40 | 40 | | | | | | | | 40 |
| | | Self-dispersible pigment dispersion II-2 | Phosphoric acid group | Tetraethyl ammonium | | | 40 | | | | | | | |
| | | Self-dispersible pigment dispersion II-3 | Phosphoric acid group | Tetramethyl ammonium | | | | 40 | | | | | | |
| | | Self-dispersible pigment dispersion II-4 | Phosphoric acid group | Sodium | | | | | | | | 40 | 40 | |
| | | Self-dispersible pigment dispersion II-5 | Carboxylic acid group | Tetrabutyl ammonium | | | | | 40 | | 24 | | | |
| | | Self-dispersible pigment dispersion II-6 | Carboxylic acid group | Tetraethyl ammonium | | | | | | 40 | | | | |
| | | Self-dispersible pigment dispersion II-7 | Carboxylic acid group | Sodium | | | | | | | 16 | | | |
| | Water-soluble organic solvent | Diglycerin (α value = 74.2) | | | 10 | 10 | 10 | 10 | 10 | 10 | 10 | 10 | 10 | 10 |
| | | Tetraethylene glycol monobutyl ether (α value = 55.2) | | | 47 | 31 | 47 | 47 | 47 | 47 | 47 | 47 | 31 | 48 |
| | Surface active agent | SURFYNOL 465 | | | 2 | 2 | 2 | 2 | 2 | 2 | 2 | 2 | 2 | 2 |
| | Basic substance | Triethanol amine | | | 1 | 1 | 1 | 1 | 1 | 1 | 1 | 1 | 1 | |
| | Water | Distilled water | | | | 16 | | | | | | | 16 | |
| | Total | | | | 100 | 100 | 100 | 100 | 100 | 100 | 100 | 100 | 100 | 100 |
| Water content relative to total ink | | | | | 34 | 50 | 34 | 34 | 34 | 34 | 34 | 34 | 50 | 34 |
| pH of ink | | | | | 10.5 | 10 | 9.7 | 9.7 | 9.7 | 9.6 | 9.6 | 9.6 | 9.7 | 8.3 |
| Initial viscosity | | | | | 20.3 | 10.3 | 20.2 | 18.7 | 19.5 | 20 | 19.4 | 87.3 | 12.7 | 20 |
| Viscosity after being left for 7 days at 70°C | | | | | 20.5 | 10.2 | 22.8 | 21.9 | 19.5 | 20.9 | 21.2 | 61.5 | 10.1 | 28.7 |
| Rate of change in viscosity | | | | | 1 | -1 | 12.9 | 17.1 | 0 | 4.5 | 9.3 | -29.6 | -20.5 | 43.5 |
| Storage stability | | | | | A | A | B | B | A | A | A | B | B | B |

DESC

The raw materials listed in Table 2 are as described below.
SURFYNCL 465 (trade name): Ethylene oxide adduct of acetylene glycol (surface active agent) produced by Air Products Industry Co., Ltd

Results in Table 2 show that the inkjet inks produced in Examples II-1 to II-7, which belong to the present invention, suffered no significant viscosity changes and were excellent in storage stability.

In contrast, the inkjet inks produced in Comparative Examples II-1 and II-2, in which quaternary ammonium ions were not contained but sodium ions were contained as counter ions, suffered serious viscosity changes and were poor in storage stability. The ink produced in Comparative Example II-3, in which quaternary ammonium ions were used as counter ions but no basic substances were contained, also suffered a serious viscosity increase and was poor in storage stability.

INDUSTRIAL APPLICABILITY

[**0081**] The water-based inkjet ink according to the present invention can be used for printing on ordinary plain paper in various inkjet printers because it does not cause curling or cockling when used to print on ordinary plain paper, and is excellent in dispersion stability of pigments at ordinary temperature as well as under a high-temperature and high-humidity conditions. Thus, even after the printers are left unused for a long period of time, the risk of blocking of nozzles and clogging of the liquid discharge pipe is diminished, and on-machine stability is improved. Also, it is not impaired in dispersion stability of pigments even when it is stored at a high temperature, and is resistant to environmental changes during transportation and storage and excellent in storage stability. The present inkjet ink is suitable for use in a line type inkjet printer which has a large size ink containers and many discharge heads.

## Claims

1. A water-based inkjet ink comprising at least water, a low polarity water-soluble organic solvent and a pigment, and optionally comprising a basic substance in an amount to adjust the pH value of the ink to 9 to 11,
wherein said water constitutes 60 percent by mass or less of the total quantity of the ink, while said water-soluble organic solvent constitutes 15 percent by mass or more of the total quantity of the ink,
wherein in presence of said basic substance said water constitutes 25 to 55 percent by mass of the total quantity of the ink, and said water-soluble organic solvent constitutes 15 to 65 percent by mass of the total quantity of the ink,
said water-soluble organic solvent comprising at least one selected from the group consisting of tetraethylene glycol monobutyl ether triethylene glycol monohexyl ether, triethylene glycol ethyl ether ($\alpha$-value=59,3), 2-ethyl-1,3-hexanediol and hexylene glycol,
said pigment comprising a self-dispersible pigment that has anionic functional groups on the surface thereof and contains, as counter ions, quaternary ammonium ions represented by the formula (1) described below:

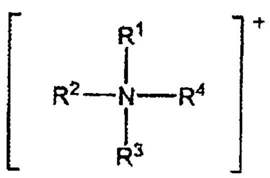

(1)

wherein $R^1$, $R^2$, $R^3$ and $R^4$ independently represent a substituted or unsubstituted alkyl group.

2. A water-based inkjet ink according to claim 1, wherein said quaternary ammonium ions represented by the formula (1) are contained in a molar ratio (said quaternary ammonium ions/the total counter ions) of 0.45 to 1 relative to the total counter ions of said self-dispersible pigment.

3. A water-based inkjet ink according to claim 2, wherein $R^1$, $R^2$ $R^3$ and $R^4$ in said quaternary ammonium ions represent an alkyl group with 1 to 4 carbon atoms.

4. A water-based inkjet ink according to claim 3, wherein said anionic functional groups in said self-dispersible pigment are at least one selected from the group consisting of carboxylic acid group, sulfonic acid group and phosphoric acid group.

5. A water-based inkjet ink according to claim 1, wherein said water-soluble organic solvent is at least one selected from the group consisting of tetraethylene glycol monobutyl ether and triethylene glycol monohexyl ether.

6. A water-based inkjet ink according to claim 5, wherein said tetraethylene glycol monobutyl ether constitutes 20 percent by mass or more of the total quantity of said ink.

7. A water-based inkjet ink according to claim 1, wherein said water-soluble organic solvent additionally comprises at least one selected from the group consisting of glycerin and polyglycerins in an amount of 5 percent by mass or more relative to the total quantity of said ink.

8. A water-based inkjet ink according to claim 1, wherein said basic substance is a hydroxide of either an alkali metal or an alkaline earth metal, or an amine.

## Patentansprüche

1. Wässrige Tinte für Tintenstrahldrucker, welche zumindest Wasser, ein wasserlösliches organisches Lösungsmittel mit niedriger Polarität und ein Pigment umfasst und optional eine basische Substanz in einer Menge umfasst, dass der pH-Wert der Tinte auf 9 bis 11 eingestellt wird,
wobei das Wasser 60 Massenprozent oder weniger der Gesamtmenge der Tinte ausmacht, während das wasserlösliche organische Lösungsmittel 15 Massenprozent oder mehr der Gesamtmenge der Tinte ausmacht,
wobei bei Vorliegen der basischen Substanz das Wasser 25 bis 55 Massenprozent der Tinte ausmacht, und das wasserlösliche organische Lösungsmittel 15 bis 65 Massenprozent der Gesamtmenge der Tinte ausmacht,
wobei das wasserlösliche organische Lösungsmittel wenigstens ein Lösungsmittel umfasst, das aus der Gruppe bestehend aus Tetraethylenglycolmonobutylether, Triethylenglycolmonohexylether, Triethylenglycolethylether ($\alpha$-Wert = 59,3), 2-Ethyl-1,3-hexandiol und Hexylenglycol ausgewählt ist,
wobei das Pigment ein selbstdispergierbares Pigment ist, welches anionische funktionelle Gruppen auf seiner Oberfläche aufweist und als Gegenionen quaternäre Ammoniumionen gemäß folgender Formel (1) enthält:

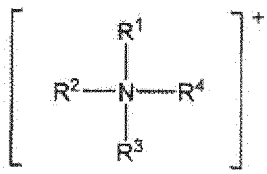
(1)

wobei $R^1$, $R^2$, $R^3$ und $R^4$ unabhängig voreinander eine substituierte oder unsubstituierte Alkylgruppe darstellen.

2. Wässrige Tinte für Tintenstrahldrucker gemäß Anspruch 1, wobei die quaternären Ammoniumionen gemäß Formel (1) in einem molaren Verhältnis (quaternäre Ammoniumionen/Gesamtmenge an Gegenionen) von 0,45 bis 1, bezogen auf die Gesamtmenge an Gegenionen des selbstdispergierbaren Pigments, enthalten sind.

3. Wässrige Tinte für Tintenstrahldrucker gemäß Anspruch 2, wobei $R^1$, $R^2$, $R^3$ und $R^4$ in den quaternären Ammoniumionen eine Alkylgruppe mit 1 bis 4 Kohlenstoffatomen darstellen.

4. Wässrige Tinte für Tintenstrahldrucker gemäß Anspruch 3, wobei die anionischen funktionellen Gruppen in dem selbstdispergierbaren Pigment wenigstens eine Gruppe, ausgewählt aus der Gruppe bestehend aus Carbonsäuregruppen, Sulfonsäuregruppen und Phosphorsäuregruppen, sind.

5. Wässrige Tinte für Tintenstrahldrucker gemäß Anspruch 1, wobei das wasserlösliche organische Lösungsmittel wenigstens ein Lösungsmittel, ausgewählt aus der Gruppe bestehend aus Tetraethylenglycolmonobutylether und Triethylenglycolmonohexylether, ist.

6. Wässrige Tinte für Tintenstrahldrucker gemäß Anspruch 5, wobei der Tetraethylenglycolmonobutylether 20 Massenprozent oder mehr der Gesamtmenge der Tinte ausmacht.

7. Wässrige Tinte für Tintenstrahldrucker gemäß Anspruch 1, wobei das wasserlösliche organische Lösungsmittel außerdem wenigstens eine Verbindung, ausgewählt aus der Gruppe bestehend aus Glycerin und Polyglycerinen,

in einer Menge von 5 Massenprozent oder mehr, bezogen auf die Gesamtmenge der Tinte, umfasst.

**8.** Wässrige Tinte für Tintenstrahldrucker gemäß Anspruch 1, wobei die basische Substanz ein Alkalimetall- oder Erdalkalimetall-Hydroxid oder ein Amin ist.

## Revendications

**1.** Encre pour jet d'encre à base d'eau comprenant au moins de l'eau, un solvant organique soluble dans l'eau de faible polarité et un pigment, et comprenant facultativement une substance basique en une certaine quantité pour ajuster la valeur de pH de l'encre de 9 à 11,
dans laquelle ladite eau constitue 60 % en masse ou moins de la quantité totale de l'encre, tandis que le solvant organique soluble dans l'eau constitue 15 % en masse ou plus de la quantité totale de l'encre,
dans laquelle en présence de ladite substance basique, ladite eau constitue de 25 à 55 % en masse de la quantité totale de l'encre, et ledit solvant organique soluble dans l'eau constitue de 15 à 65 % en masse de la quantité totale de l'encre,
ledit solvant organique soluble dans l'eau comprenant au moins un solvant choisi dans le groupe constitué par l'éther monobutylique de tétraéthylène glycol, l'éther monohexylique de triéthylène glycol, l'éther éthylique de triéthylène glycol (valeur $\alpha$ = 59,3), le 2-éthyl-1,3-hexanediol et l'hexylène glycol,
ledit pigment comprenant un pigment auto-dispersible qui a des groupes fonctionnels anioniques sur sa surface et contient, comme contre-ions, des ions ammonium quaternaire représentés par la formule (1) décrite ci-dessous :

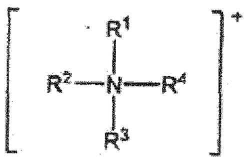

(1)

dans laquelle $R^1$, $R^2$, $R^3$ et $R^4$ représentent indépendamment un groupe alkyle substitué ou non substitué.

**2.** Encre pour jet d'encre à base d'eau selon la revendication 1, dans laquelle lesdits ions ammonium quaternaire représentés par la formule (1) sont contenus selon un rapport molaire (lesdits ions ammonium quaternaire/le total des contre-ions) de 0,45 à 1, par rapport au total des contre-ions dudit pigment auto-dispersible.

**3.** Encre pour jet d'encre à base d'eau selon la revendication 2, dans laquelle $R^1$, $R^2$, $R^3$ et $R^4$ dans lesdits ions ammonium quaternaire représentent un groupe alkyle de 1 à 4 atomes de carbone.

**4.** Encre pour jet d'encre à base d'eau selon la revendication 3, dans laquelle lesdits groupes fonctionnels anioniques dans ledit pigment auto-dispersible sont au moins un groupe choisi dans le groupe constitué par un groupe acide carboxylique, un groupe acide sulfonique et un groupe acide phosphorique.

**5.** Encre pour jet d'encre à base d'eau selon la revendication 1, dans laquelle ledit solvant organique soluble dans l'eau est au moins un solvant choisi dans le groupe constitué par l'éther monobutylique de tétraéthylène glycol et l'éther monohexylique de triéthylène glycol.

**6.** Encre pour jet d'encre à base d'eau selon la revendication 5, dans laquelle ledit éther monobutylique de tétraéthylène glycol constitue 20 % en masse ou plus de la quantité totale de ladite encre.

**7.** Encre pour jet d'encre à base d'eau selon la revendication 1, dans laquelle ledit solvant organique soluble dans l'eau comprend en outre au moins un solvant choisi dans le groupe constitué par la glycérine et les polyglycérines en une quantité de 5 % en masse ou plus par rapport à la quantité totale de ladite encre.

**8.** Encre pour jet d'encre à base d'eau selon la revendication 1, dans laquelle ladite substance basique est un hydroxyde d'un métal alcalin ou d'un métal alcalino-terreux, ou une amine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005220296 A
- JP 2007144931 A
- JP 2007091911 A
- JP 2003513137 A
- WO 9748769 A
- JP HEI10110129 B
- JP HEI11246807 A
- JP HEI1157458 A
- JP HEI11189739 A
- JP HEI11323232 A
- JP 2000265094 A

### Non-patent literature cited in the description

- **ATSUSHI FUJITA et al.** systematic Qualitative Organic Analysis (Mixtures). Kazama Shobo Co., Ltd, 1974